# EUROPÄISCHE PATENTANMELDUNG

(11) **EP 0 817 410 A2**
(43) Veröffentlichungstag der Anmeldung: **07.01.1998**
(21) Anmeldenummer: 97104819.4
(22) Anmeldetag: 21.03.1997
(51) Int. Cl.: H04B 10/24

(54) **Endgerät für ein optisches Netz, optisches Netz und Endvermittlungsstelle hierfür**

(30) Priorität: 27.06.1996 DE 19625806
(71) Anmelder: ROBERT BOSCH GMBH, 70442 Stuttgart (DE)
(72) Erfinder: Weber, Jens, Dr., 65779 Kelkheim-Fischbach (DE); Schunk, Nikolaus, Dr., 31139 Hildesheim (DE)

(57) **Zusammenfassung**

Es wird ein optisches Verteilnetz vorgeschlagen, welches eine integrierte Übertragung von Verteildiensten und interaktiven Diensten erlaubt. Hierbei erfolgt die Teilnehmeradressierung für die interaktiven Dienste durch das SCM-Verfahren bzw. ATM-Verfahren. Die Einteilung des Frequenzbereichs erfolgt so, daß ein Übersprechen zwischen den Signalen für die Verteildienste und die Interaktivdienste durch elektrische Filter verhindert werden kann.

## Beschreibung

### Stand der Technik

Die Erfindung geht aus von einem von einem Endgerät für ein optisches Netz, einem optischen Netz, sowie einer Endvermittlungsstelle hierfür nach der Gattung der unabhängigen Ansprüche.

Aus der Deutschen Patentanmeldung mit dem Aktenzeichen 195 03 041.9 ist schon ein optisches Netz bekannt, ebenso ist aus dieser Patentanmeldung ein Endgerät hierfür bekannt. Dieses Netz weist mehrere Empfangseinrichtungen für Breitbandsignale auf. Als Beispiel für ein Breitbandsignal seien die von einem bestimmten Satelliten gesendeten Funksignale mit einer bestimmten Polarisation genannt. Diese Funksignale werden im allgemeinen in der Empfangseinrichtung auf eine Zwischenfrequenz (ZF) umgesetzt, so daß beim Empfang von Funksignalen von mehreren Satelliten und/oder mit mehreren Polarisationen mehrere Breitbandsignale mit derselben Zwischenfrequenz zur Verfügung stehen. Jedes der empfangenen und auf die gleiche Zwischenfrequenz umgesetzten Breitbandsignale wird dabei auf eine spezifische optische Trägerwellenlänge moduliert und über eine gemeinsame optische Faser dem Signalempfänger zugeleitet. Im Signalempfänger erfolgt zuerst eine Auswahl der übertragenen modulierten optischen Trägerwellenlänge und anschließend eine Demodulation des ausgewählten optischen Trägers. Zur Weiterverarbeitung des rekonstruierten Breitbandsignals mit der Zwischenfrequenz ist ein DBS-Decoder vorgesehen, wie er beispielsweise aus der Funkschau 19/95, Seiten 55 ff., bekannt ist.

Dieses Netz eignet sich im Vergleich zu einem älteren Stand der Technik wie er in dem Artikel 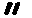 Zukunftssichere Sat-Anlagen" in der Zeitschrift Funkschau 19/92, Seiten 64 ff., beschrieben wird, vor allem dadurch aus, daß das Netz sehr flexibel bezüglich Erweiterungen ist. Insbesondere kann ein aufwendiger Matrix-Schalter entfallen. In der in der Anmeldung mit dem Aktenzeichen 195 03 041.9 vorgeschlagenen Form ist das optische Netz jedoch nur für sogenannte Verteildienste, wie beispielsweise Rundfunk nutzbar. Interaktivdienste, von denen hier stellvertretend nur Telefon, Computernetzwerke, Video on demand genannt werden, benötigen zusätzlich eine sogenannte Rückleitung, wie sie in der Zeitschrift Funkschau 7/95, Seiten 26 ff., geschildert wird.

### Vorteile der Erfindung

Die erfindungsgemäße Anordnung mit den kennzeichnenden Merkmalen der unabhängigen Patentansprüche hat demgegenüber den Vorteil, daß sie erlaubt, Interaktivdienste und Verteildienste zu integrieren. Dies bringt Kostenvorteile aber auch Handhabungsvorteile mit sich. Ebenso werden auch Dienste möglich, welche auf der Kombination von Interaktiv- und Verteildiensten basieren. Als weiterer Vorteil ist anzusehen, daß innerhalb eines Gebäudes nur ein einziges Netz zu installieren ist, welches alle Verteil- und Interaktivdienste integriert. Hierdurch ergeben sich beträchtliche Vorteile beim Neuanschluß eines Gebäudes. Schließlich ist es vorteilhaft, ein Endgerät zum integrierten Empfang der Verteil- und der Interaktiv-Dienste vorzusehen, da somit ein minimaler Einstellungsaufwand für den Endverbraucher erforderlich ist.

Darüber hinaus ist es vorteilhaft, eine Endvermittlungsstelle mit einem optischen Sender aus Laser und optischem Modulator für den Hinkanal auszustatten, da somit eine zentrale Schnittstelle zu bestehenden Kupfernetzwerken geschaffen wird.

Durch die in den abhängigen Ansprüchen aufgeführten Maßnahmen sind vorteilhafte Weiterbildungen und Verbesserungen des in den unabhängigen Ansprüchen angegebenen optischen Netzes und des Endgeräts möglich. Es ist besonders vorteilhaft, das Hinsignal in mehrere Subkanäle zu unterteilen, wobei jeder Subkanal Information für eine bestimmte Menge von Endgeräten enthält, da somit mehrere Endgeräte mit einer gemeinsamen Übertragungsleitung an eine Endvermittlungsstelle angeschlossen werden können. Hierdurch werden die Anschlußkosten pro Endgerät signifikant gesenkt. Diese Unterteilung wird in vorteilhafter Wesie durch die SCM-Codierung erreicht.

Weiterhin ist es besonders vorteilhaft, den optischen Träger für das Rücksignal in einer zentralen Sendeeinrichtung zu erzeugen, und im Endgerät den zentral erzeugten Träger mittels eines Reflexionsmodulators zu modulieren, da somit die Reparatur und Austauschmöglichkeit für den Laser erleichtert wird.

Das Netz wird ebenso wie das Endgerät technisch deutlich vereinfacht, wenn der Rückkanalsendelaser im jeweiligen Endgerät angeordnet ist. Dies ist besonders vorteilhaft, da auf einen bidirektionalen Faserverstärker im Netz und auf einen Kanaltrenndemultiplexer sowie den Reflexionsmodulator im Endgerät verzichtet werden kann. Besonders für kleine Netze ergibt sich somit ein Kostenvorteil.

Indem ein frequenzselektiver Filter erlaubt, Licht einer vorgegebenen ersten Wellenlänge zu selektieren, läßt sich eine größere Programmvielfalt erreichen, insbesondere kann auf diese Weise der Empfang von verschiedenen Satelliten mit einer Einrichtung sehr einfach realisiert werden.

Es ist besonders vorteilhaft, zur Übertragung des Breitbandsignals auf direkte Satellitenübertragung zurückzugreifen, da diese Infrastruktur schon vorhanden ist. Ebenso sind in den meisten Haushalten schon Empfangseinrichtungen hierfür vorgesehen, welche somit weitergenutzt werden können.

Die Vorschaltung eines Sternkopplers vor die Übertragungsleitungen stellt ein besonders zuverlässiges und preiswertes, sowie leicht integrierbares Bauelement zur Verteilung der optischen Träger an mehrere Teilnehmer zur Verfügung.

Die Zusammenfassung der optischen Träger mittels des Sternkopplers und die Aufteilung dieser optischen Träger am Ende einer weiteren optischen Faser mittels eines zweiten Sternkopplers oder eines Leistungsteilers dient in vorteilhafter Weise der Reduktion des Leitungsaufwandes der Übertragungsvorrichtung, da für mehrere relativ nahe beieinanderliegende Endgeräte der Weg zwischen Leistungsteiler und Sternkoppler nur über eine einzige optische Faser führt.

Die Ausbildung eines Teils der für die Übertragung des Hinsignals oder des Rücksignals benutzten optischen Übertragungsleitung als bidirektionaler optischer Faserverstärker stellt sich als besonders vorteilhaft dar, da hierdurch mit einer einzelnen Laserdiode eine hohe Dauer-Ausgangsleistung erzielt wird. Somit wird eine preiswerte zentrale Erzeugung des optischen Trägers für das Rücksignal möglich.

### Zeichnung

Ausführungsbeispiele der Erfindung sind in der Zeichnung dargestellt und in der nachfolgenden Beschreibung näher erläutert. Es zeigen
Figur 1 ein optisches Netz mit zwei Endgeräten und einer an das Netz angeschlossenen Endvermittlungsstelle,
Figuren 2a-f ein Breitbandsignal vor und nach der Modulation eines optischen Trägers,
Figuren 3a-d das Signal für die Interaktivdienste vor und nach der Modulation eines optischen Trägers,
Figur 4 das optische Signal, welches an einem Ausgang des Sternkopplers anliegt und
Figur 5 ein weiteres Netz, bei welchem der optische Träger für das Rücksignal außerhalb des Endgeräts erzeugt wird.

### Beschreibung der Erfindung

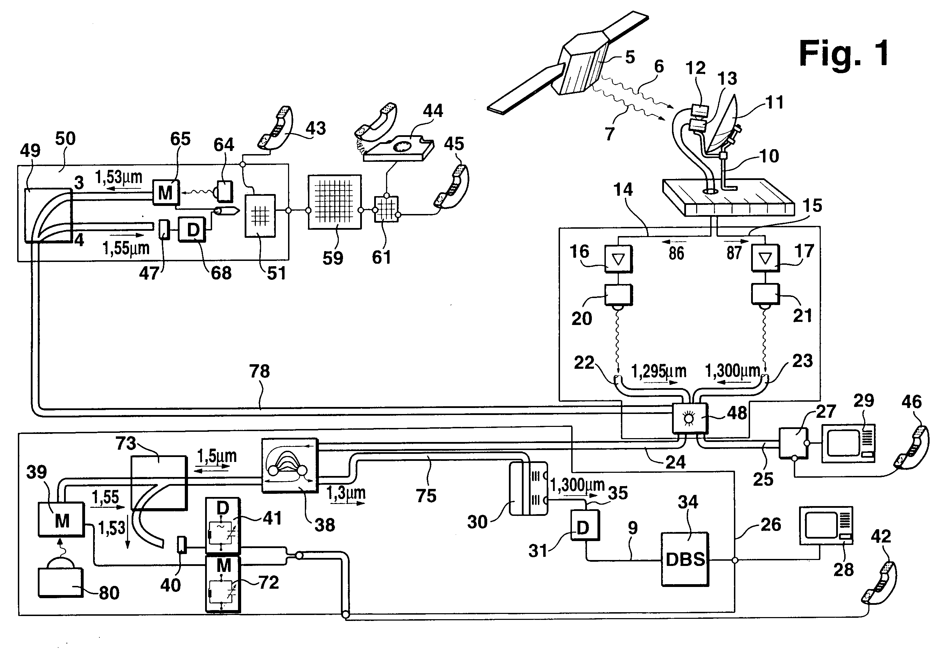

In Figur 1 ist ein Satellit 5 dargestellt, der ein erstes, horizontal polarisiertes breitbandiges Funksignal 6 und ein zweites, vertikal polarisiertes breitbandiges Funksignal 7 aussendet. Eine Satellitenantenne 10 umfaßt einen Reflektor 11, einen ersten Empfangskonverter 13 und einen zweiten Empfangskonverter 12. Die beiden Empfangskonverter 12, 13 sind in bekannter Weise als LNB-Konverter ausgebildet. Diese sind so vor dem Reflektor 11 angebracht, daß das horizontal polarisierte Funksignal 6 mit einem und das vertikal polarisierte Funksignal 7 mit dem anderen der beiden Empfangskonverter 12, 13 empfangbar ist. Dem zweiten Empfangskonverter 12 ist unter Zwischenschaltung einer ersten Antennenleitung 15 ein erster Verstärker 17 nachgeschaltet. Ebenso ist dem ersten Empfangskonverter 13 unter Zwischenschaltung einer zweiten Antennenleitung 14 ein zweiter Verstärker 16 nachgeschaltet. Der Ausgang des Verstärkers 16 ist mit dem Eingang der Laserdiode 20 mit der Abstrahlwellenlänge 1 verbunden, ebenso ist der Ausgang des Verstärkers 17 mit dem Eingang der Laserdiode 21 mit der Abstrahlwellenlänge 2 verbunden. Im hier angeführten Ausführungsbeispiel beträgt die Abstrahlwellenlänge 1 1,295 Mikrometer, und die Abstrahlwellenlänge 2 1,300 Mikrometer. Das an den jeweiligen Verstärkerausgängen 16 und 17 anliegende Signal moduliert somit das von den Laserdioden 20 und 21 emittierte Licht. Das modulierte optische Ausgangssignal der ersten Laserdiode 20 gelangt in einen ersten Lichtleiter 22, der ebenso wie ein zweiter Lichtleiter 23, welcher das modulierte optische Ausgangssignal der Laserdiode 21 weiterleitet, einem Sternkoppler 48 zugeführt ist.

Ebenfalls mit dem Sternkoppler 48 verbunden, über die Hausanschlußfaser 78, ist die Endvermittlungsstelle 50. In der Endvermittlungsstelle 50 befindet sich ein Koppelfeld 51 zur Herstellung von Verbindungen mit externen Netzen oder anderen Kommunikationsendgeräten 43, welche an dieselbe Endvermittlungsstelle 50 angeschlossen sind. An dem dem Netz zugewandten Anschluß ist die Endvermittlungsstelle 50 mit einem optischen Verzweiger 49 versehen, dessen unverzweigtes Ende mit der Hausanschlußfaser 78 verbunden ist. Mit einem der beiden Zweige des optischen Verzweigers 49 ist ein Rückkanalempfangsdetektor 47 verbunden. Bei diesem Rückkanalempfangsdetektor 47 handelt es sich um einen Lichtsensor, welcher bei mindestens einer bestimmten Wellenlänge 4 sensitiv ist. Im gewählten Ausführungsbeispiel beträgt diese Wellenlänge 4 1,55 Mikrometer. Der Rückkanalempfangsdetektor 47 ist gefolgt von einem Rückkanaldemodulator 68, dessen Ausgang mit dem Koppelfeld 51 verbunden ist. Darüber hinaus ist das Koppelfeld 51 mit einem optischen Modulator verbunden, welcher als Hinsignalmodulator 65 benutzt wird, und das von einer als Hinkanalsendeelement 64 ausgebildeten Laserdiode ausgesandte Licht mit der Wellenlänge 3 moduliert. Der Ausgang des Hinsignalmodulators 65 ist mit dem zweiten Zweig des optischen Verzweigers 49 verbunden.

Des weiteren sind an den Sternverteiler 48 zwei Endgeräte 26 und 27 über die erste Übertragungsleitung 24 und die zweite Übertragungsleitung 25 angeschlossen. Mit dem Endgerät 26 ist ein erstes Rundfunkgerät 28 und ein Kommunikationsendgerät 42 verbunden, mit dem Endgerät 27 ist ein zweites Rundfunkgerät 29 und ein Kommunikationsendgerät 46 verbunden.

Das Endgerät 26 ist in Figur 1 im Detail dargestellt. An die erste Übertragungsleitung 24 schließt sich im Endgerät 26 ein Demultiplexer 38 an, welcher Licht oberhalb und unterhalb von etwa 1,4 Mikrometer trennt. An den Demultiplexer 38 schließen sich die Zwischenübertragungsfaser 76 für das langwelligere Licht und die Zwischenübertragungsfaser 75 für das kurzwelligere Licht an.

Die Zwischenübertragungsfaser 76 ist mit einem optischen Verzweiger 73 verbunden, dessen einer Zweig zu einem Hinkanalempfangsdetektor 40, gefolgt von einem SCM (Sub-Carrier-Modulation)-Demodulator 41, führt. Im zweiten Zweig des optischen Verzweigers 73 befindet sich ein Rücksignalmodulator 39 und ein Rückkanalsendelaser 80. Der Rücksignalmodulator 39 ist über den SCM-Modulator 72 mit dem Kommunikationsendgerät 42 verbunden. An die Zwischenübertragungsfaser 75 schließt sich ein wellenlängensensitiver optischer Filter 30 an, dessen Ausgang eine Empfangsleitung 35 mit einem darauffolgenden Demodulator 31 nachgeschaltet ist. An den Demodulator 31 ist über die Zuleitung 9 ein Decoder 34 angeschlossen. Der Ausgang des Decoders 34 bildet den Ausgang des ersten Endgeräts 26 und ist mit dem ersten Rundfunkgerät 28 verbunden. Der Aufbau des zweiten Endgeräts 27 ist identisch mit dem des ersten Endgeräts 26 und deshalb hier nicht im Detail dargestellt.

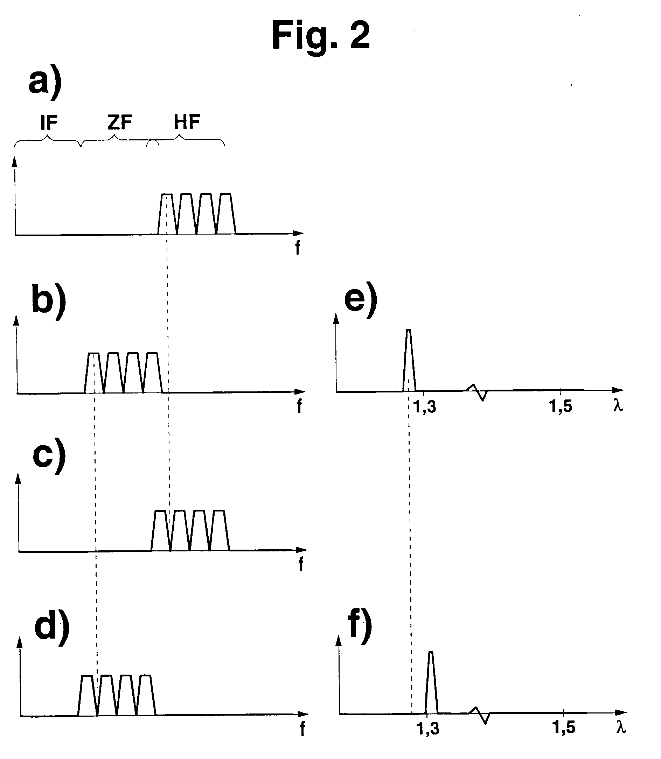

Zur Erläuterung der Funktionsweise der in Figur 1 dargestellten Vorrichtung wird auf die Figuren 2a-2f, 3a-3d und 4 Bezug genommen.

Der zweite Empfangskonverter 12 ist in diesem Beispiel so angeordnet, daß er zum Empfang der vertikal polarisierten breitbandigen Funksignale 6 des Satelliten 5 geeignet ist, während der erste Empfangskonverter 13 horizontal polarisierte breitbandige Funksignale 7 empfängt. Mittels des ersten Empfangskonverters 13 erfolgt außerdem eine Umsetzung des empfangenen vertikal polarisierten Funksignals 7 von dem vom Satelliten 5 festgelegten Hochfrequenzbereich (HF) in einen Zwischenfrequenzbereich (ZF), welcher niedriger gelegen ist als der Hochfrequenzbereich (HF) des empfangenen vertikal polarisierten Funksignals 7. Ebenso bewirkt der zweite Empfangskonverter 12 eine Frequenzumsetzung des empfangenen horizontal polarisierten Funksignals 6. In den Figuren 2a und 2c sind die empfangenen Funksignale 6, 7 im Hochfrequenzbereich dargestellt. Die Figuren 2b und 2d geben die in den Zwischenfrequenzbereich umgesetzten Zwischenfrequenzsignale 86, 87 schematisch wieder. Das breitbandige Funksignal 6 weist dabei, ebenso wie das breitbandige Funksignal 7, beispielhaft mehrere Einzelfrequenzbänder auf, die nebeneinander angeordnet sind, und den aus dem Satellitenfunk bekannten Transpondern entsprechen. Die Transponder des vertikal polarisierten Funksignals 7 sind hierbei jeweils um eine halbe Transponderbandbreite gegen die Transponder des horizontal polarisierten breitbandigen Funksignals 6 verschoben. Die Bandbreite der Funksignale 6, 7 beträgt beispielsweise ein GHz, die Bandbreite der breitbandigen Zwischenfrequenzignale 86, 87 ebenfalls. Ihre Frequenz liegt etwa zwischen ein und zwei GHz. Das breitbandige Zwischenfrequenzsignal 86 gelangt über den zweiten Verstärker 16 zur Laserdiode 20, in der das verstärkte breitbandige Zwischenfrequenzsignal 86 auf die erste Trägerwellenlänge 1 aufmoduliert wird. Der zweite Verstärker 16 ist als Regelverstärker ausgeführt und bewirkt eine Anpassung des Signalpegels an die Sendeleistung der Laserdiode 20, so daß bezüglich Rauschen und Verzerrungen eine optimale Aussteuerung erfolgt. Die Modulation des Eingangs der Laserdiode 20 mit dem breitbandigen Zwischenfrequenzsignal 86 bewirkt eine Verbreiterung der ausgestrahlten Linie von 1,295 Mikrometer um 12,4 Pikometer. Ebenso wie hier für das breitbandige Zwischenfrequenzsignal 86 beschrieben, gelangt das breitbandige Zwischenfrequenzsignal 87 über den ersten Verstärker 17 zur zweiten Laserdiode 21, wo es die Trägerwellenlänge 2 moduliert, woraufhin dieses frequenzmodulierte Signal in den zweiten Lichtleiter 23 eingekoppelt wird. Das modulierte Spektrum des optischen Signals, welches von der Laserdiode 20 ausgesandt wird, ist schematisch in Figur 2e dargestellt, das Spektrum des optischen Signals, welches von der Laserdiode 21 ausgesandt wird, ist schematisch in Figur 2f dargestellt. Es ist eine Wellenlängendifferenz von 0,005 Mikrometer zwischen den einzelnen Laserlinien vorgesehen. Dieser Abstand ist hinreichend groß im Vergleich zur durch die Modulation bewirkten Linienbreite von 12,4 Pikometer, um eine klare Kanaltrennung zu gewährleisten. Trotzdem können im Wellenlängenfenster zwischen 1,28 Mikrometer und 1,32 Mikrometern bis zu 8 Übertragungskanäle für Breitbandsignale eingerichtet werden. Dieser Wellenlängenbereich wird im folgenden auch 1,3 Mikrometer-Fenster oder erster optischer Träger genannt.

Die beiden Lichtleiter 22 und 23 sind am Sternkoppler 48 angeschlossen, in dem eine Verteilung der eingekoppelten optischen frequenzmodulierten Signale zu etwa gleichen Anteilen in die Übertragungsleitungen 24 und 25 erfolgt.

Im ersten Endgerät 26 gelangt dieses optische Signal zu einem ersten Demultiplexer 38, welcher den ersten optischen Träger von anderen, im folgenden noch zu behandelnden, optischen Signalen abtrennt. Dieser erste optische Träger gelangt über die Zwischenübertragungsfaser 75 zum wellenlängenselektiven optischen Filter 30, welcher so eingestellt ist, daß an seinem Ausgang jeweils nur das mit einem einzigen breitbandigen Zwischenfrequenzsignal modulierte optische Signal eines Lasers anliegt. Im vorliegenden Beispiel ist nur das optische Signal mit einer Wellenlänge von 1,300 Mikrometern ausgekoppelt, wie es in Figur 2f dargestellt ist und in den Lichtleiter 23 eingekoppelt wird. In der Demodulationsvorrichtung 31 folgt eine Demodulation des Ausgangssignals des wellenlängenselektiven optischen Filters 30 so, daß in der Zuleitung 9 wieder ein elektrisches breitbandiges Zwischenfrequenzsignal vorliegt. Im in Figur 1 gezeigten Beispiel ist dies das breitbandige Zwischenfrequenzsignal 87. Im Decoder 34 erfolgt dann in bekannter Weise die weitere Frequenzumsetzung und die Decodierung des empfangenen ausgewählten breitbandigen Zwischenfrequenzsignals und die Weiterleitung des decodierten Signals an das Rundfunkgerät 28. Die Auswahl des jeweiligen breitbandigen Zwischenfrequenzsignals 86, 87 wird üblicherweise von einem Benutzer des Endgeräts 26 vorgenommen, welcher entweder manuell den wellenlängenselektiven Filter 30 justiert oder über eine Eingabe in den Decoder 34 die Justierung des Filters 30 durch den Decoder 34 vornehmen läßt. In analoger Weise gelangt eines der beiden Funksignale 6, 7 über das zweite Endgerät 27 zum zweiten Rundfunkgerät 29.

Die Auswahl, welches der beiden Funksignale 6, 7 an den Decoder 34 geführt werden soll, erfolgt also mit dieser Vorrichtung erst im jeweiligen Endgerät 26, 27. Somit ist es möglich, daß der Benutzer eines der beiden Endgeräte 26, 27 die Auswahl nach seinen persönlichen Wünschen trifft, ohne die Auswahl des Benutzers des anderen Endgeräts zu beeinflussen. Für die Ausbildung des wellenlängenselektiven optischen Filters 30 sind mehrere Arten bekannt, insbesondere Fabry-Perot-Filter, Gitter-Spektrographen oder Array-Demultiplexer.

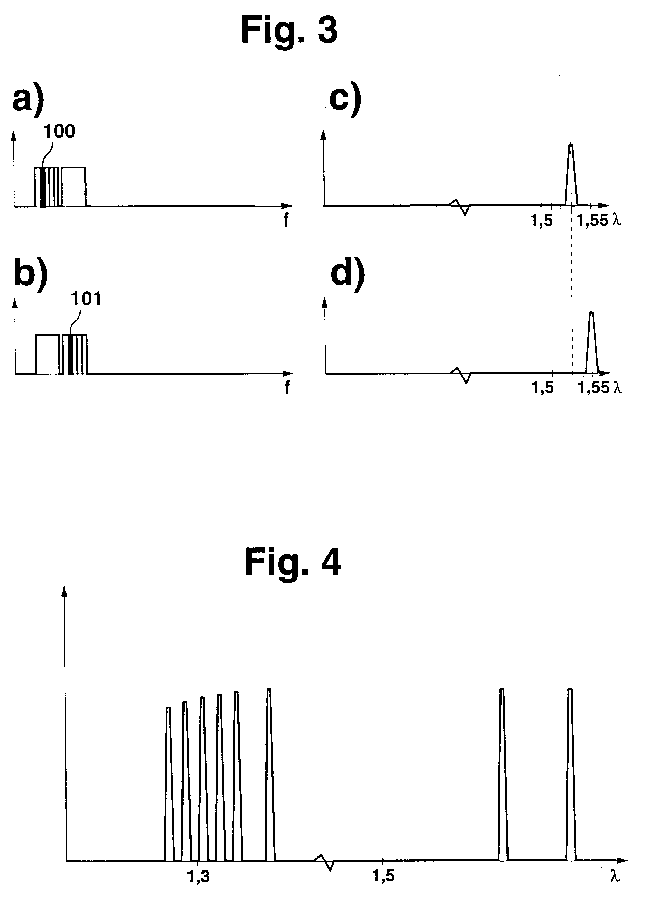

Interaktive Dienste bedingen sowohl eine Aussendung von Information, des sogenannten Rücksignals, durch das Endgerät 26, über einen sogenannten Rückkanal, als auch den Empfang von Information, des sogenannten Hinsignals, im selben Endgerät 26, über einen sogenannten Hinkanal. Die Übertragung dieser Signale wird in einem zweiten optischen Wellenlängenfenster im selben Netz realisiert. Um die Auswirkungen des optischen Übersprechens zu vermeiden, werden Hin- und Rücksignal zusätzlich in einem anderen elektrischen Frequenzbereich angesiedelt. Zur genaueren Erläuterung der Funktionsweise wird auf die Figuren 3a-3d Bezug genommen. Für die interaktive Signalübertragung stehen die elektrischen Frequenzbereiche zwischen 50 und 850 MHz (IF) zur Verfügung, welche von den im ersten Abschnitt beschriebenen Verteildiensten nicht benutzt werden. Beispielsweise kann der Frequenzbereich von 50 bis 449 MHz für vom Endgerät zu empfangende Informationen, die Hinsignale, und der Frequenzbereich von 450 bis 849 MHz für vom Endgerät auszusendende Informationen, die Rücksignale, benutzt werden. Diese beiden Frequenzbereiche sind schematisch in Figur 3a bzw. 3b dargestellt. Der elektrische Frequenzbereich wird weiterhin in 3 MHz breite Unterkanäle unterteilt. Mit dieser Bandbreite von 3 MHz ist eine Übertragungsrate von 2 Megabit pro Sekunde möglich, welche durch entsprechende Filterausführung in einer Vermittlungsstelle auf 144 Kilobit pro Sekunde begrenzt werden kann, was dem ISDN-Standard entspricht. Ebenso kann die Übertragungsrate durch Kombination von mehreren Subkanälen erhöht werden. Die Unterteilung in Unterkanäle ist, der besseren Übersichtlichkeit wegen, in Figuren 3a und 3b nur vergröbert dargestellt. Die für die interaktive Kommunikation mit dem Endgerät 26 bestimmten Daten sind in den bezeichneten Unterkanälen in Figuren 3a und 3b enthalten. Hierbei bezeichnet 100 den Unterkanal für das Hinsignal und 101 den Unterkanal für das Rücksignal.

Zur interaktiven Kommunikation ist das Endgerät 26 mit einem Kommunikationsendgerät 42 ausgestattet. Dieses Kommunikationsendgerät 42 ist in Figur 1 als Telefon ausgestaltet, kann jedoch ebenso Daten übertragen. Weiterhin ist auch vorgesehen, daß die durch das Kommunikationsendgerät 42 empfangenen Daten andere als Sprachinformation beinhalten. Die vom Kommunikationsendgerät 42 ausgesandten Daten werden zuerst im SCM-Modulator 72 in den dem Endgerät 26 zugeordneten Unterkanal 101 umgesetzt. Das elektrische Signal, das vom SCM-Modulator 72 erzeugt wird, das sogenannte Rücksignal, wird in einem optischen Modulator, dem Rücksignalmodulator 39 benutzt, um das vom Rückkanalsendelaser 80 erzeugte Licht zu modulieren. Als Wellenlänge 4 des vom Rückkanalsendelaser 80 ausgestrahlten Lichts wurden 1,55 Mikrometer gewählt. Das mit dem Rücksignal modulierte Licht mit der Wellenlänge 4 ist schematisch in Figur 3d dargestellt. Das mit dem Rücksignal modulierte Licht passiert den optischen Verzweiger 73 in Rückwärtsrichtung, so daß dieser im hier betrachteten Zusammenhang keine Auswirkungen hat. Das mit dem Rücksignal modulierte Licht gelangt über die Zwischenübertragungsfaser 76 zum Ausgang des ersten Demultiplexers 38, welcher konstruktiv so ausgelegt sein muß, daß er eine Ausbreitung von Licht mit 1,5 Mikrometern von der Zwischenübertragungsfaser 76 zur ersten Übertragungsleitung 24 nicht behindert. Es ist für die Funktionalität des Endgeräts und des optischen Netzes unerheblich, ob hierbei ein Teil des mit dem Rücksignal modulierten Lichts in die Zwischenübertragungsfaser 75 gelangen kann. Das mit dem Rücksignal modulierte Licht gelangt über den Sternkoppler 24 in die Hausanschlußfaser 78 und hierdurch zur Endvermittlungsstelle 50. Ein Teil des Lichts gelangt durch den optischen Verzweiger 49 zum Rückkanalempfangsdetektor und dem dahinter geschalteten Demodulator 68, durch welche die ursprüngliche Information wiederhergestellt wird. Diese wird durch das Koppelfeld 51 an ein anderes Kommunikationsendgerät weitergeleitet. Das Kommunikationsendgerät kann ein Fernsprechgerät, jedoch auch eine irgendwie geartete Datenverarbeitungsanlage sein. Insbesondere ist eine Vorrichtung zur maschinellen Bearbeitung beispielsweise eines Videowunsches vorgesehen.

Für die optische Übertragung des Hinkanals sind ähnliche technische Vorrichtungen vorgesehen. Zur genaueren Erläuterung der Funktionsweise wird wiederum auf die Figuren 3a-3d Bezug genommen. Für die Hinsignale ist, wie in Figur 3a schematisch dargestellt, der Frequenzbereich von 50 bis 449 MHz vorgesehen, welcher wiederum in 3 MHz breite Unterkanäle unterteilt ist. Die Unterteilung in Unterkanäle ist, der besseren Übersichtlichkeit wegen, in Figur 3a nur vergröbert dargestellt. Der Unterkanal, welcher das für das Endgerät 26 bestimmte Hinsignal enthält, ist in Figur 3a mit dem Bezugszeichen 100 bezeichnet.

Das elektrische Signal aus Figur 3a wird herangezogen, um mittels des Hinkanalmodulators 65 die vom Hinkanallaser 64 ausgesandte Strahlung zu modulieren. Wie Figur 3a illustriert, handelt es sich hierbei schon um das SCM-gemultiplexte Signal, welches die Hinsignale für alle an das optische Netz angeschlossenen Endgeräte 26 und 27 enthält. Die Wellenlänge 3 des Hinkanallasers 64 beträgt 1,53 Mikrometer. Das mit dem Hinsignal modulierte Licht passiert den optischen Verzweiger 49 in der Endvermittlungsstelle 50 in Rückwärtsrichtung und wird über die Hausanschlußfaser 78 an den Sternkoppler 48 weitergeleitet. Über den Sternkoppler 48 steht das mit dem Hinsignal modulierte Licht sowohl dem Endgerät 27 als auch dem Endgerät 26 zur Verfügung. Im Endgerät 26 wird das mit dem Hinsignal modulierte Licht in die Zwischenübertragungsfaser 46 geleitet. Durch den optischen Verzweiger 73 gelangt das mit dem Hinsignal modulierte Licht zum Hinkanalempfangsdetektor 40. Licht, welches durch den Verzweiger 73 zum Rücksignalmodulator 39 gelangt, beeinträchtigt die Funktion des Endgeräts oder des optischen Netzes nicht. Im Hinkanalempfangsdetektor 40 wird das mit dem Hinsignal modulierte Licht in das elektrische Hinsignal mit der vollen Bandbreite umgewandelt. Im nachfolgenden SCM-Demodulator 41, welcher für das jeweilige Endgerät 26 speziell abgeglichen ist, wird der für das Endgerät bestimmte Subkanal, welcher in Figur 3a geschwärzt ist, herausgeschnitten und in eine für das Kommunikationsendgerät 42 verarbeitbare Frequenz umgesetzt. Gegebenenfalls kann in diesem SCM-Demodulator eine weitere datenschutzbedingte Modulation oder Codierung rückgängig gemacht werden. Der endgerätspezifische interaktive Dienst beruht also wie der im 1,3 Mikrometer-Fenster angebotene Verteildienst auf einer Verteilung an alle angeschlossenen Endgeräte. Er wird erst im Endgerät individualisiert, indem durch technische Voraussetzungen, insbesondere den SCM-Demodulator, welcher spezifisch für ein bestimmtes Endgerät ist, ein Endgerät 26 ausschließlich die für dieses Endgerät 26 bestimmten Informationen an das Kommunikationsendgerät 42 ausgeben kann.

Das optische Multiplexsignal, wie es sich aus der Überlagerung der optischen Signale für 6 Verteildienste und für die Interaktivdienste, und bei letzteren wiederum für Hin- und Rücksignale, ergibt, ist in Figur 4 dargestellt. Dies stellt gleichzeitig das Signal dar, wie es am Eingang eines der Endgeräte 26, 27 anliegt.

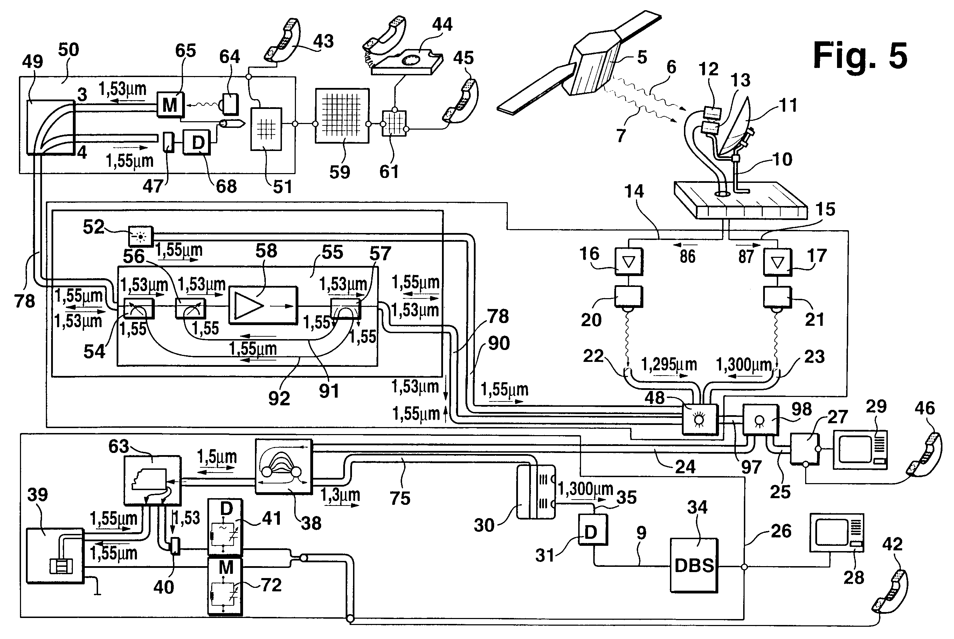

In Figur 5 ist ein weiteres Ausführungsbeispiel für das optische Netz und ein Endgerät hierfür dargestellt. Gleiche Bauteile wie in Figur 1 wurden mit den gleichen Bezugszeichen versehen. Diese Anordnung unterscheidet sich insbesondere im Aufbau des optischen Übertragungswegs für das 1,5 Mikrometer-Fenster zur Verteilung von Interaktivdiensten vom vorhergehenden Ausführungsbeispiel:

Im Endgerät 26 ist anstelle des Rückkanalsendelasers 80 ein Reflexionsmodulator 39 vorgesehen, an dessen optischen Anschluß sich anstelle des optischen Verzweigers 73 aus Figur 1 ein Kanaltrenndemultiplexer 63 anschließt. Der Kanaltrenndemultiplexer 63 ist hierbei so angeordnet, daß sein Anschluß für das Multiplexsignal zum Demultiplexer 38 weist, sein 1,55 Mikrometer Anschluß zum oben erwähnten Reflexionsmodulator 39, und sein 1,53 Mikrometer Anschluß zum Hinkanalempfangsdetektor 40 weist. An den Hinkanalempfangsdetektor 40 schließen sich wie im ersten Ausführungsbeispiel ein SCM-Demodulator 41 und ein Kommunikationsendgerät 42 an.

Der Eingang des Multiplexers 38 bildet auch den Eingang des Endgeräts 26, welcher mit der ersten Übertragungsleitung 24 verbunden ist. Diese erste Übertragungsleitung 24 bildet einen der Ausgänge des Leistungsverteilers 98, dessen Eingang über die Zentralleitung 97 mit dem Ausgang des Sternkopplers 48 verbunden ist. Der Sternkoppler 48, die Zentralleitung 97, und der Leistungsverteiler 98 ersetzen zusammen den Sternkoppler aus dem ersten Ausführungsbeispiel. Der Leistungsteiler 98 dient zur Informationsaufteilung an eng benachbarte Endgeräte. Der Sternkoppler 48 ist über die Hausanschlußfaser 78, von der ein Teil als bidirektionaler Faserverstärker 55 ausgebildet ist, mit der Endvermittlungsstelle 50 verbunden. Der bidirektionale Faserverstärker 55 beinhaltet einen unidirektionalen Faserverstärker 58, dessen Durchlaßrichtung von der Endvermittlungsstelle 50 in Richtung des Sternkopplers 48 zeigt. Am Ausgang des unidirektionalen Faserverstärkers 58 ist ein wellenlängenselektiver bidirektionaler Koppler 57 angeschlossen, am Eingang des unidirektionalen Faserverstärkers 58 sind zwei unidirektionale wellenlängenselektive Koppler 54 und 56 vorgeschaltet. Der näher am unidirektionalen Faserverstärker 58 liegende bidirektionale wellenlängenselektive Koppler 56 ist dergestalt geschaltet, daß er einzukoppelndes Licht in Richtung des Faserverstärkers 58 einkoppelt, während der weiter vom unidirektionalen Faserverstärker 58 entfernte unidirektionale wellenlängensensitive Koppler 54 ein einzukoppelndes Signal in Richtung der Endvermittlungsstelle 50 einkoppelt. Alle drei wellenlängenselektiven Koppler 54, 56 und 57 stellen die Kopplung nur für Licht mit 1,55 Mikrometern, jedoch nicht für Licht mit einer Wellenlänge von 1,53 Mikrometern her. Zusätzlich wird eine externe optische Beschaltung der wellenlängenselektiven Koppler 54, 56 und 57 vorgenommen. Eine erste Rückkopplungsfaser 91 verbindet den dem unidirektionalen Faserverstärker 58 zugewandten Eingang des wellenlängenselektiven Kopplers 57 mit dem dem unidirektionalen Faserverstärker 58 abgewandten Eingang des unidirektionalen wellenlängenselektiven Kopplers 56, eine zweite Rückkoppelfaser verbindet den vom unidirektionalen Faserverstärker 58 abgewandten Eingang des bidirektionalen wellenlängenselektiven Kopplers 57 mit dem dem unidirektionalen Faserverstärker 58 zugewandten Eingang des unidirektionalen wellenlängenselektiven Kopplers 54.

Am anderen Ende der Hausanschlußfaser 78 ist diese mit der Endvermittlungsstelle 50 verbunden. Diese weist in bekannter Weise einen optischen Verzweiger 49 auf, dessen einfacher Anschluß mit der Hausanschlußfaser 78 verbunden ist, und dessen einer verzweigter Anschluß mit dem Rückkanalempfangsdetektor 47 und dem Demodulator 68 verbunden ist, und dessen anderes Ende mit dem Hinkanalmodulator 65 und dem Hinkanalsender 64 verbunden ist. An den Hinkanalmodulator 65 und den Demodulator 68 schließt sich in ebenfalls aus Figur 1 bekannter Weise das Koppelfeld 51 an.

Zur Verdeutlichung der Funktionsweise des Ausführungsbeispiels in Figur 5, insbesondere der Verteilung der Verteildienste, sei auf die Funktionsbeschreibung zu Figur 1 verwiesen. Ebenso bleibt die Kanal- und Subkanalverteilung für die Interaktivdienste unverändert.

Das Licht mit einer Wellenlänge von 1,55 Mikrometer, welches als optischer Träger für das Rücksignal dient, wird in einem zentral angeordneten Rückkanalsendeelement 52 erzeugt. Dieses zentrale Rückkanalsendeelement kann z. B. an einer gut zugänglichen Stelle des Netzes liegen, es ist jedoch auch denkbar, das Rückkanalsendeelement 52 zusammen mit oder in der Endvermittlungsstelle anzuordnen. Der vom Rückkanalsendeelement ausgestrahlte Träger für das Rücksignal wird über die Rückkanalträgerzuführungsfaser 90, den Sternkoppler 48 den Endgeräten 26 und 27 zur Verfügung gestellt. Im Endgerät 26 wird der Träger über den Demultiplexer 38 und den Kanaltrenn-Demuliplexer 63 an den Reflexionsmodulator 39 weitergeleitet. Im Reflexionsmodulator 39 wird der eintreffende, unmodulierte Träger mit dem Rücksignal moduliert und denselben Übertragungsweg zum Sternkoppler 48 über den Kanaltrenn-Demuliplexer 63, den Demultiplexer 38, die erste Übertragungsleitung 24, den Leistungsverteiler 98, und die Zentralleitung 97 zurückgeschickt. Hierbei ist beim Aufbau des Kanaltrenn-Demultiplexers 63 und des Demultiplexers 38 zu berücksichtigen, daß der Lichtweg für Licht mit 1,55 Mikrometern Wellenlänge reversibel sein muß. Es ist jedoch für die Funktionalität des Endgeräts, wie auch des optischen Netzes unerheblich, ob darüber hinaus Licht mit einer Wellenlänge von 1,55 Mikrometern am Hinkanalempfangsdetektor 40 oder auch am Filter 30 angelangt, da das Rücksignal aufgrund seiner anderen elektrischen Modulationsfrequenz ausgefiltert wird. In der Hausanschlußfaser 78 befindet sich somit Licht mit 1,55 Mikrometern Wellenlänge, welches von dem Endgerät 26 moduliert wurde, ebenso wie derselbe Träger, welcher mit einem Rücksignal von Endgerät 27 moduliert wurde. Diese Träger überlagern sich ungestört, da die Modulation in verschiedenen Subfenstern stattfand. Um die hohen Verluste durch die verschiedenen optischen Komponenten auszugleichen, wird der mit dem Rücksignal modulierte Träger in einem bidirektionalen Faserverstärker 55 verstärkt und dann an die Endvermittlungsstelle 50 weitergeleitet, wo er in aus der Beschreibung zu Figur 1 bekannter Weise verarbeitet wird.

Es sei an dieser Stelle die Funktionsweise des bidirektionalen Faserverstärkers 55 näher erläutert. Das von der Endvermittlungsstelle ausgesandte Hinsignal, welches auf einen 1,53 Mikrometer Träger aufmoduliert ist, passiert die beiden unidirektionalen wellenlängenselektiven Koppler 54 und 56 unbeeinflußt und wird in dem als Erbium dotierten Faserverstärker verstärkt. Der bidirektionale wellenlängenselektive Koppler 57 wird ebenfalls ohne Beeinflussung des optischen Signals passiert. Für sich vom Sternkoppler 48 in Richtung der Endvermittlungsstelle 50 fortpflanzendes Licht jeglicher Wellenlänge ist der Faserverstärker 58 undurchlässig. Beträgt die Wellenlänge des in dieser Richtung einfallenden Lichts jedoch 1,55 Mikrometer, so wird es vom bidirektionalen wellenlängenselektiven Koppler 57 ausgekoppelt und über die erste Rückkoppelfaser 91 an den unidirektionalen wellenlängenselektiven Koppler 56 weitergeleitet, durch den dieses Licht an den unidirektionalen Faserverstärker 58 in dessen Durchlaßrichtung weitergeleitet wird. Das eingekoppelte Signal wird somit verstärkt und trifft nun zum zweiten Mal auf den bidirektionalen wellenlängenselektiven Koppler 57, jedoch in umgekehrter Richtung, weshalb es über die zweite Rückkoppelfaser 92 an den ersten unidirektionalen wellenlängenselektiven Koppler 54 weitergeleitet wird. Dieser koppelt das nunmehr verstärkte Signal in der ursprünglichen Ausbreitungsrichtung wieder in die Hausanschlußfaser 78 ein.

Anstelle über zwei Konverter können die Funksignale 6, 7 ebenso über einzelne Konverter mit je einem eigenen Reflektor empfangen werden. Es ist weiterhin vorgesehen, nicht nur breitbandige Funksignale verschiedener Polarisationsrichtungen, sondern auch die aus verschiedenen Richtungen (Orbitpositionen von Satelliten) empfangenen Funksignale auf verschiedene Trägerwellenlängen 1,2 aufzumodulieren. Ebenso ist es möglich, mehr als zwei breitbandige Funksignale zur Übertragung in einem solchen Netz vorzusehen. Ein bevorzugtes Anwendungsgebiet für das optische Netz ist die integrierte wohnungsweise Zuordnung von Satellitensignalen und interaktiven Diensten, wie Telefon und interaktivem Rundfunk. Durch das optische Multiplexing ist eine Übertragung von mehr breitbandigen Funksignalen zum Endgerät möglich als es dem derzeitigen Standard entspricht. Die Ausweitung der anbietbaren Verteildienste ermöglicht es, die Grenze zwischen Interaktivdiensten und Verteildiensten zu verwischen, wozu das optische Netz mit einem Endgerät, welches beide Dienste in einem Endgerät verarbeitet, bevorzugt geeignet ist.

So ist beispielsweise vorgesehen, eine Information über den Rückkanal anzufordern, jedoch erfolgt die Übertragung der Information nicht, wie im oben geschilderten Ausführungsbeispiel vorgesehen, auf dem Hinkanal. Vielmehr erfolgt auf dem Hinkanal nur die Mitteilung eines Decodierschlussels oder eine Freischaltung für ein über Satelliten empfangenes Funksignal. Eine solche Anwendung ist für netzwerkabhängige Computersysteme sinnvoll, wo eine hohe Übertragungsrate wünschenswert ist, jedoch keine lange Nutzungsdauer des Übertragungswegs notwendig ist. Sie erfordert aber noch zusätzlich eine schaltbare Querverbindung zwischen dem Kommunikationsendgerät 42 und dem ersten Rundfunkgerät 28.

Weiterhin ist vorgesehen, eine Rundfunkübertragung über den Rückkanal anzufordern. Die Übertragung erfolgt über den Hinkanal. Für den Dienst 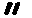 Video on Demand" werden die empfangenen Daten nebst Decodierschlüssel auf einem Speichermedium z. B. auf einer Harddisc im Endgerät abgespeichert. Sie stehen somit für eine Auswertung bzw. für ein Anschauen zur Verfügung. Eine Datenübertragung über online-Dienste ist in derselben Weise möglich.

Neben SCM-Verfahren zur Teilnehmerselektion im Verteilnetz ist für den Hinkanal auch das ATM-(Asynchron Transfer Mode) Übertragungsverfahren möglich, da im Header der ATM-Zelle die Endgeräte-Identifikation enthalten ist. Im Rückkanal ist das ATM-Verfahren nicht anwendbar, da die Benutzer der Endgeräte im Sternnetz unabhängig voneinander den Rückkanal nutzen können und damit eine zeitliche Überschneidung der Rücksignale möglich ist.

## Patentansprüche

1. Endgerät für ein optisches Netz mit einem optischen Anschluß, dadurch gekennzeichnet, daß das Endgerät durch den optischen Anschluß an das optische Netz anschließbar ist, daß im Endgerät Mittel zum Empfang von Licht mit einer ersten Wellenlänge (1), welches mit einem Breitbandsignal (86, 87) moduliert ist, vorgesehen sind, daß Mittel zum Empfang von Licht einer zweiten Wellenlänge (3), welches mit einem Hinsignal moduliert ist, vorgesehen sind, und daß Licht einer dritten Wellenlänge (4) aussendbar oder sowohl empfangbar als auch aussendbar ist, wobei im Endgerät Mittel vorgesehen sind, dieses Licht einer dritten Wellenlänge (4) mit einem Rücksignal zu modulieren.

2. Endgerät nach Anspruch 1, dadurch gekennzeichnet, daß das Hinsignal ein SCM (Sub-Carrier-Modulation)-Signal ist, wobei nur ein oder mehrere vorgegebene Unterkanäle des Hinsignals vom Endgerät verarbeitbar sind.

3. Endgerät nach einem der vorhergehenden Ansprüche, dadurch gekennzeichnet, daß das Rücksignal ein SCM-Signal ist, wobei nur ein oder mehrere vorgegebene Unterkanäle des Rückkanals für die Aussendung eines Rücksignals nutzbar sind.

4. Endgerät nach einem der vorhergehenden Ansprüche, dadurch gekennzeichnet, daß die Mittel zur Modulation des Lichts mit der dritten Wellenlänge (4) als Reflexionsmodulator ausgebildet sind.

5. Endgerät nach einem der Ansprüche 1-3, dadurch gekennzeichnet, daß das Endgerät einen Rückkanalsendelaser (80) aufweist, welcher Licht einer dritten Wellenlänge (4) emittiert, welches mit der Rückantwort moduliert wird.

6. Endgerät nach einem der vorhergehenden Ansprüche, dadurch gekennzeichnet, daß ein frequenzselektiver Filter (30) vorgesehen ist, der Licht einer vorgegebenen ersten Wellenlänge (2) selektiert.

7. Endgerät nach einem der vorhergehenden Ansprüche, dadurch gekennzeichnet, daß an die Mittel zum Empfang von Licht mit einer ersten Wellenlänge (1), welches mit einem Breitbandsignal (86, 87) moduliert sind, ein DBS (Direct Broadcast Satellite)-Demodulator zur Umwandlung des Breitbandsignals (86, 87) in ein von einem Rundfunkempfänger empfangbares Signal angeschlossen ist.

8. Endgerät nach einem der vorhergehenden Ansprüche, dadurch gekennzeichnet, daß die Breitbandsignale (86,87) von einem Satelliten empfangene, auf eine Zwischenfrequenz umgesetzte DBS-Signale sind.

9. Optisches Netz aus optischen Übertragungsfasern, mit mindestens einem ersten Anschluß, an das eine Vorrichtung (12) zum Empfang von Breitbandsignalen (6) angeschlossen ist, wenigstens einem optischen Anschluß, an den ein Endgerät (26) angeschlossen ist, wobei sich an den ersten Anschluß ein Laser (20) anschließt und das von der Vorrichtung empfangene Breitbandsignal (6) auf vom Laser (20) ausgesandtes Licht einer ersten Wellenlänge (1) aufmoduliert wird, dadurch gekennzeichnet, daß mindestens ein zweiter Anschluß zum Anschluß einer Hausanschlußfaser vorgesehen ist, daß Licht mit einer zweiten Wellenlänge (3), welches mit einem Hinsignal moduliert ist, vom zweiten Anschluß an den optischen Anschluß übertragbar ist, daß Licht mit einer dritten Wellenlänge (4), welches mit einem Rücksignal moduliert ist, vom optischen Anschluß an den zweiten Anschluß übertragbar ist, daß Licht der ersten Wellenlänge (1) vom Laser (20) an den optischen Anschluß übertragbar ist, und daß die Wellenlängen (1,3,4) verschieden sind.

10. Optisches Netz nach Anspruch 9, dadurch gekennzeichnet, daß Licht mit der dritten Wellenlänge (4) vom zweiten Anschluß an den optischen Anschluß übertragbar ist.

11. Optisches Netz, nach einem der Ansprüche 9-10, dadurch gekennzeichnet, daß wenigstens ein Sternverteiler (48) vorgesehen ist, wobei ein Sternverteiler mindestens drei Verteileranschlüsse aufweist und ein Signal, das an einem Verteileranschluß angelegt wird, an jedem Verteileranschluß anliegt, und daß wenigstens ein Verteileranschluß mit dem optischen Anschluß für ein Endgerät (26, 27) durch eine optische Übertragungsfaser verbunden ist.

12. Optisches Netz nach Anspruch 11, dadurch gekennzeichnet, daß alle Anschlüsse über die optischen Übertragungsfasern mit dem Sternverteiler (48) verbunden sind.

13. Optisches Netz nach einem der Ansprüche 9-12, dadurch gekennzeichnet, daß das Hinsignal ein aus mehreren Subkanälen zusammengesetztes SCM (Sub-Carrier-Modulation)-Signal ist, wobei jeder Subkanal für eine bestimmte Menge von Endgeräten verwertbare Information enthält.

14. Optisches Netz nach einem der Ansprüche 9-12, dadurch gekennzeichnet, daß das Hinsignal ATM-Signal ist.

15. Optisches Netz nach einem der Ansprüche 9-14, dadurch gekennzeichnet, daß das Rücksignal ein aus mehreren Subkanälen zusammengesetztes SCM (Sub-Carrier-Modulation)-Signal ist, wobei jeder Subkanal für eine bestimmte Menge von Endgeräten verwertbare Information enthält.

16. Optisches Netz nach einem der Ansprüche 9-15, dadurch gekennzeichnet, daß eine Endvermittlungsstelle (50) an die Hausanschlußfaser anschließbar ist.

17. Optisches Netz nach einem der Ansprüche 9-16, dadurch gekennzeichnet, daß ein Teil der für die Übertragung des Hinsignals und/oder des Rücksignals benutzten optischen Übertragungsfaser oder der Hausanschlußfaser als bidirektionaler optischer Faserverstärker (55) ausgebildet ist.

18. Optisches Netz nach einem der Ansprüche 9 bis 17, dadurch gekennzeichnet, daß das Breitbandsignal (6) ein von einem Satelliten empfangenes DBS-Signal ist.

19. Endvermittlungsstelle (50) zum Anschluß an ein optisches Netz, dadurch gekennzeichnet, daß sie mit einem Hinkanallaser (64), einem Hinsignalmodulator (65) und einem Rückkanalempfangsdetektor (47) versehen ist, daß in dieser Endvermittlungsstelle (50) der Hinkanallaser (64) Licht mit der zweiten Wellenlänge (3) erzeugt, welches durch den Hinsignalmodulator (65) mit dem Hinsignal modulierbar ist, und daß in der Endvermittlungsstelle (50) das mit dem Rücksignal modulierte Licht mit der dritten Wellenlänge (4) im Rückkanalempfangsdetektor (47) empfangbar ist.
